# EUROPEAN PATENT APPLICATION

(11) **EP 1 681 859 A2**
(43) Date of publication of application: **19.07.2006**
(21) Application number: 06250130.9
(22) Date of filing: 11.01.2006
(51) Int. Cl.: H04N 5/445

(54) **Method and apparatus for providing user interface for content search**

(30) Priority: 14.01.2005 KR 2005003698
(71) Applicant: Samsung Electronics Co., Ltd., Yeongtong-gu Suwon-si, Gyeonggi-do (KR)
(72) Inventor: Ko,Chang-Seog 311-601 Sinyeongtong Hyundai APT, Hwaseong-si, Gyeonggi-do (KR); Kim, Son-Hui 205-1102 Samsung Hangaram APT, Anyang-si, Gyeonggi-do (KR); Song,Sang-Gon 410 Noble Officetel, Anyang-si, Gyeonggi-do (KR)
(74) Representative: Robinson, Ian Michael

(57) **Abstract**

A method and an apparatus are provided for providing a user interface (200) for a content search that facilitates the selection of a search object during the content search. The method for providing a user interface (200) for a content search includes displaying items that indicate content types on a first axis of a specified display region and displaying items that indicate devices storing content on a second axis that crosses the first axis; displaying cells of specified regions (430), on each of which a selector can be located, at crossings of first-axis coordinates of the items that indicate the content types and second-axis coordinates of the items that indicate the devices, respectively; moving the selector among the cells according to a user's request for selector movement; and displaying the content that correspond to the content type of the item corresponding to the first-axis coordinate of the cell on which the selector is located, among the content stored in the device of the item corresponding to the second-axis coordinate of the cell on which the selector is located.

## Description

Methods and apparatuses consistent with the present invention relate to providing a user interface, and more particularly to providing a user interface for a content search.

The home network, which has been actively researched lately, serves to connect diverse devices, such as personal computers (PCs), intelligent appliances and wireless communication devices through one network. Accordingly, a user can control other devices that constitute the home network using one device.

As an example of an application of a home network, a user can search for content stored in other devices that constitute the home network using a specified device. In this case, the user may select specified content among searched content and download or stream the selected content to the specified device.

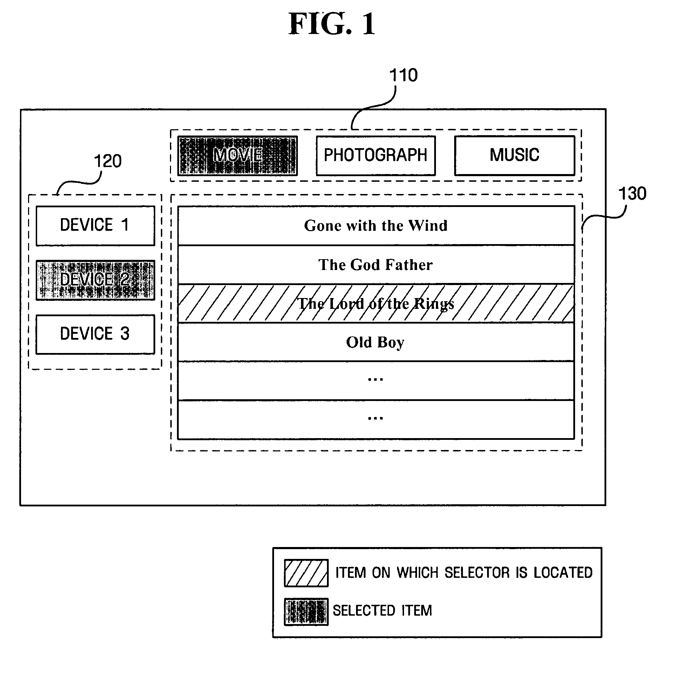

For this, the specified device used by the user to search for the content may produce a list of the content stored in other devices, and display this content list to the user through a user interface as illustrated in Figure 1.

Figure 1 is a view illustrating a conventional user interface for a content search.

Referring to Figure 1, the conventional user interface includes a type region 110 for displaying items representing types of content, a device region 120 for displaying items representing devices in which content is stored, and a content region 130 for displaying a list of content.

The user interface displays a list of movie content stored in "Device 2" and indicates that a selector is located on the third item of the content list. In this state, the user can select a desired movie from the displayed movie list by moving the selector using the direction keys of an input device (not shown), e.g., a remote control.

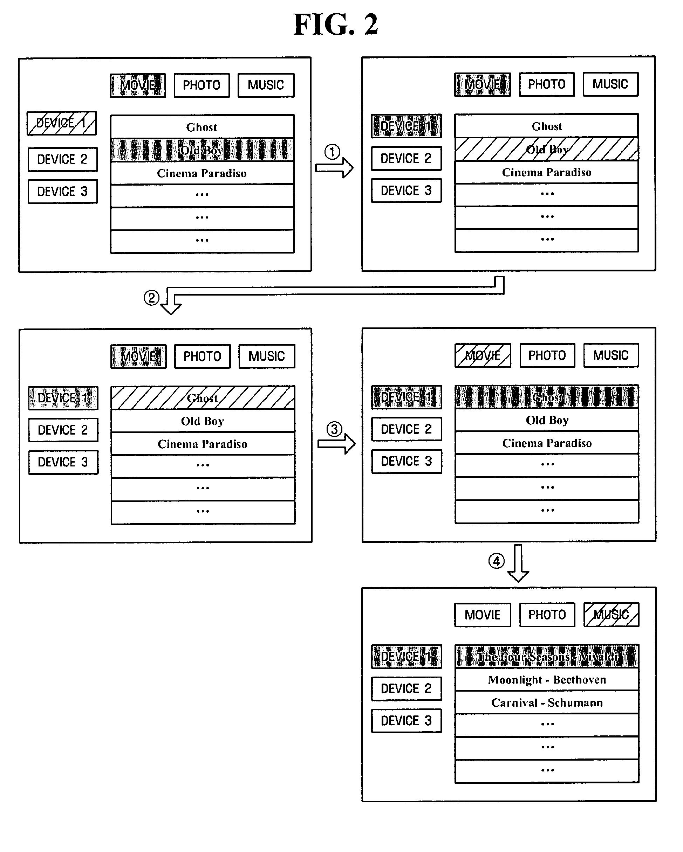

In the same manner, the user can select a desired device or content type after moving the selector to the type region 110 or device region 120 using the direction keys of the input device. In this state, the selected item is highlighted, so that the user can recognize which device is being searched and which content type is being searched for. Hereinafter, a conventional content search process will be explained with reference to Figure 2.

Figure 2 is a view explaining a conventional content search process.

The user interface illustrated in the left upper corner of Figure 2 displays a list of movie content stored in "Device 1," and a selector is located on the first item (e.g., "Device 1") of the device region 120. In this state, the user can search for the movie content stored in "Device 2" or "Device 3" by moving a selector using an "up" or "down" button of an input device (not shown).

In this state, if the user intends to search for music content stored in "Device 1," the user moves the selector to the content list region 130 using a "right" button of the input device ①. At this time, the selector may be located on a highlighted item (e.g., "Old Boy") in the content list area 130, and the item (e.g., "Device 1") in the device region 120, on which the selector was last located, is kept highlighted.

Then, in order to move the selector to the type region 110, the user moves the selector to the uppermost item (e.g., "Ghost") of the content region 130 using the "up" button of the input device ②.

Then, the user moves the selector to the type region 110 by manipulating the "up" button of the input device once more ③. At this time, the selector may be located on a highlighted item (e.g., "Movie") in the type region 110, and the item (e.g., "Ghost") in the content region 130, on which the selector was last located, is kept highlighted.

Last, the user may move the selector to an item (e.g., "Music") by twice manipulating the "right" button of the input device ⑤. If the selector has moved to the item (e.g., "Music"), a list of music content stored in the "Device 1" is displayed in the content region 130.

In this state, if the user intends to search for music content stored in "Device 3," the user must move the selector to the device region 120 by manipulating direction buttons of the input device in a similar manner to that described above.

In the case of using the conventional user interface as described above, however, the device items and the content type items should be separately selected, and thus, if the user intends to change the search object (e.g., the device that stores the content type and the content), the direction buttons of the input device should be manipulated several times and this is inconvenient. Accordingly, a user interface is required that better facilitates the selection of the search object when the content search is performed.

According to the present invention there is provided an apparatus and method as set forth in the appended claims. Preferred features of the invention will be apparent from the dependent claims, and the description which follows.

The present invention provides a user interface that facilitates the selection of a search object during a content search.

According to an aspect of the present invention, there is provided a method for providing a user interface for a content search, according to the present invention, which comprises displaying items that indicate content types on a first axis of a specified display region and displaying items that indicate devices storing content on a second axis that crosses the first axis; displaying cells of specified regions, on each of which a selector can be located, at crossings of first-axis coordinates of the items that indicate the content types and second-axis coordinates of the items that indicate the devices, respectively; moving the selector among the cells according to a user's request for selector movement; and displaying the content that correspond to the content type of the item corresponding to the first-axis coordinate of the cell on which the selector is located, among the content stored in the device of the item corresponding to the second-axis coordinate of the cell on which the selector is located.

According to another aspect of the present invention, there is provided an apparatus for providing a user interface for a content search, which comprises a search unit for searching for content stored in other devices; a control unit for providing a list of the content searched by the search unit through a specified user interface; and a display unit for displaying the user interface provided by the control unit; wherein the user interface includes a type region for displaying items that indicate content types on a first axis of a specified display region, a device region for displaying items that indicate devices storing content on a second axis that crosses the first axis, and a selector movement region for displaying cells of specified regions, on each of which a selector can be located, at crossings of first-axis coordinates of the items that indicate the content types and second-axis coordinates of the items that indicate the devices, respectively; and wherein the control unit moves the selector among the cells according to a user's request for selector movement, and controls the display unit to display the content that correspond to the content type of the item corresponding to the first-axis coordinate of the cell on which the selector is located, among the content stored in the device of the item corresponding to the second-axis coordinate of the cell on which the selector is located.

The above and other aspects of the present invention will be more apparent from the following detailed description of exemplary embodiments taken in conjunction with the accompanying drawings, in which:
Figure 1 is a view illustrating a conventional user interface for a content search;
Figure 2 is a view explaining a conventional content search process;
Figure 3 is a view illustrating a home network system for providing a user interface according to an exemplary embodiment the present invention;
Figure 4 is a block diagram illustrating the construction of an apparatus for providing a user interface according to an exemplary embodiment of the present invention;
Figure 5 is a view illustrating a user interface according to an exemplary embodiment of the present invention;
Figure 6 is a view illustrating a movement state of a selector in the user interface of Figure 5;
Figure 7 is a view illustrating a content list displayed according to an exemplary embodiment of the present invention;
Figure 8 is view illustrating a display state of a content list according to an exemplary embodiment of the present invention;
Figure 9 is a view illustrating a display state of a content list according to another exemplary embodiment of the present invention;
Figure 10 is a view illustrating a display state of a content list according to still another exemplary embodiment of the present invention;
Figure 11 is a view illustrating a user interface according to another exemplary embodiment of the present invention;
Figure 12 is a view illustrating a movement state of a selector on a user interface according to another exemplary embodiment of the present invention;
Figure 13 is a view illustrating a display state of remaining items according to another exemplary embodiment of the present invention;
Figure 14 is a view illustrating a user interface according to still another exemplary embodiment of the present invention;
Figure 15 is a view illustrating a user interface according to still another exemplary embodiment of the present invention; and
Figure 16 is a flowchart illustrating a method for providing a user interface for a content search according to an exemplary embodiment of the present invention.

Hereinafter, exemplary embodiments of the present invention will be described in detail with reference to the accompanying drawings. The aspects and features of the present invention and methods for achieving the aspects and features will be apparent by referring to the exemplary embodiments to be described in detail with reference to the accompanying drawings. However, the present invention is not limited to the exemplary embodiments disclosed hereinafter, but can be implemented in diverse forms. The matters defined in the description, such as the detailed construction and elements, are nothing but specific details provided to assist those of ordinary skill in the art in a comprehensive understanding of the invention, and the present invention is only defined within the scope of the appended claims. In the description of the exemplary embodiments of the present invention, the same drawing reference numerals are used for the same elements across various figures.

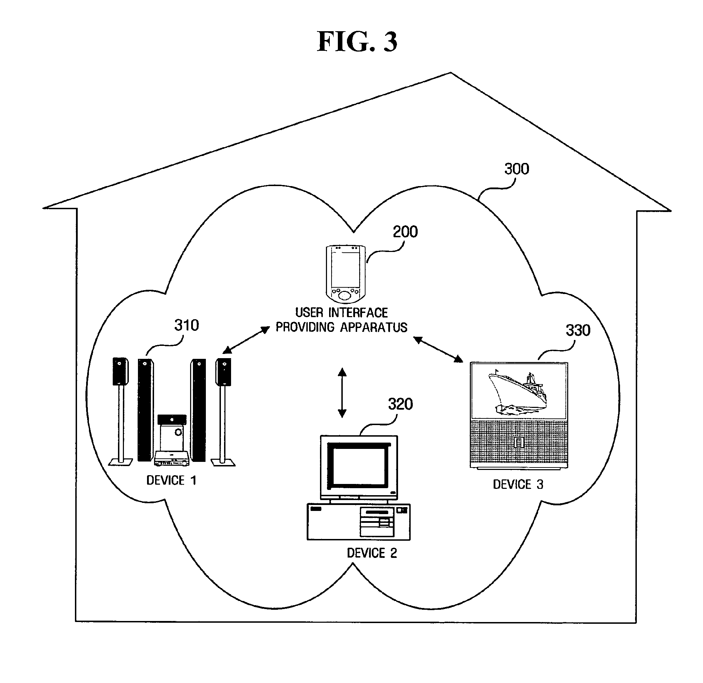

Figure 3 is a view illustrating a home network system for providing a user interface according to an exemplary embodiment of the present invention. In the following description, a home network will be described as an exemplary embodiment of the present invention. However, the present invention is not limited thereto, and it should be understood that a network system composed of an apparatus for providing a user interface 200 and one or more devices 310 to 330 for storing content (to be explained later) is within the scope of the present invention.

As illustrated in Figure 3, a home network system 300 includes a user interface providing apparatus 200 and one or more devices 310, 320 and 330. The user interface providing apparatus 200 and the devices 310, 320 and 330 are connected by wire and/or wireless connections to constitute the home network system 300.

The user interface providing apparatus 200 can display the user interface, and the devices 310, 320 and 330 can store content. The user interface providing apparatus 200 and the devices 310, 320 and 330 may be a digital television (TV), a PC, a Personal Digital Assistant (PDA), a portable phone, and others.

The user interface providing apparatus 200 requests and collects content information from the devices 310, 320 and 330. Then, the user interface providing apparatus 200 creates a content list for each content type and each device that stores content based on the collected content information. The created content list may be displayed according to a user's request.

Here, the term "content" means multimedia data such as video, audio and images. Also, the content information may include a content name, a content type, a content producer, a content explanation, a content production date, and an identifier of a device (device identifier) that stores the content.

If the user selects certain content from the content list displayed through the user interface providing apparatus 200, the user interface providing apparatus 200 may download or stream the selected content from the device that stores it and play back the downloaded or streamed content.

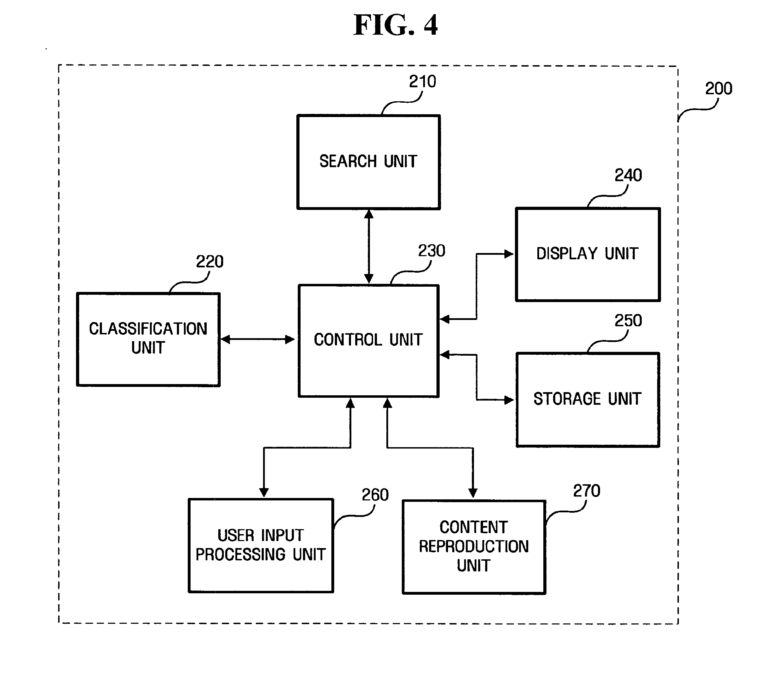

The user interface providing apparatus 200 will be explained in detail in the following with reference to Figure 4.

Figure 4 is a block diagram illustrating the construction of the user interface providing apparatus according to an exemplary embodiment of the present invention.

As illustrated in Figure 4, the user interface providing apparatus 200 includes a search unit 210, a classification unit 220, a control unit 230, a display unit 240, a storage unit 250 and a user input processing unit 260.

The search unit 210 searches for the content stored in other devices 310, 320 and 330 according to a user's request. At this time, the search unit 210 can request and collect content information from the devices 310, 320 and 330. Here, the content information may include a content name, a content type, a content producer, a content explanation, a content production date, and a content storage position (e.g., a device identifier of the device that stores the content).

In order to search for the content, the search unit 210 may be connected to other devices 310 to 330 through a wire or wireless interface.

The classification unit 220 classifies the content by device (those storing the content) and content types, using the content information collected by the search unit 210. The content type indicates what information the content contains; examples include a movie, an image, and music. A list of the content classified by the classification unit 220 can be stored in the storage unit 250.

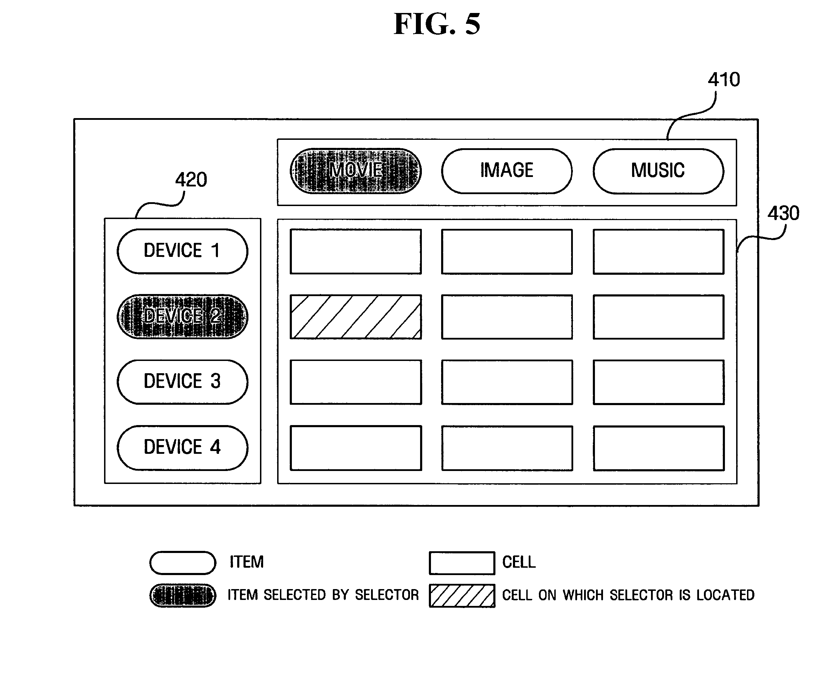

The control unit 230 provides a user interface for a content search by using the content information collected by the search unit 210 and the list of the content classified by the classification unit 220. Also, the control unit 230 controls the operations of the other functional blocks 210, 220, and 240 to 260 or the user interface according to the user's request, which is analyzed by the user input processing unit 260. Functions of the user interface provided by the control unit 230 and the control unit 230 will be explained later with reference to Figures 5 to 15.

The display unit 240 displays the user interface provided by the control unit 230.

The storage unit 250 stores the content information collected by the search unit 210 and the list of the content classified by the classification unit 220. Also, the storage unit 250 may store content downloaded from other devices 310, 320 and 330.

The user input processing unit 260 analyzes requests input by the user. For this, the user input processing unit 260 may include an input unit, such as a keypad, a touchpad, or a touchscreen through which the user can input the requests. Also, when the user inputs the requests using an input unit (e.g., a remote control) that is separated from the user interface providing apparatus 200, the user input processing unit 260 can analyzes the user's requests based on information transmitted from the input unit.

The user interface providing apparatus 200 according to an exemplary embodiment of the present invention may further include a content reproduction unit 270 that can reproduce the content selected by the user by downloading or streaming the corresponding content from other devices. The content being reproduced by the reproduction unit 270 may be displayed through the display unit 240.

Figure 5 is a view illustrating a user interface according to an exemplary embodiment of the present invention.

The user interface illustrated in Figure 5 includes a type region 410, a device region 420 and a selector movement region 430.

The type region 410 forms a first axis of the user interface, and items that indicate content types are displayed on the first axis.

The device region 420 forms a second axis of the user interface, and items that indicate devices that store the content are displayed on the second axis. Here, the first axis and the second axis cross each other and are preferably, but not necessarily, orthogonal. The first axis may be an X or Y axis, and accordingly the second axis may be a Y or X axis.

The selector movement region 430 displays cells having specified regions in positions where first-axis coordinates of the items displayed in the type region 410 cross second-axis coordinates of the items displayed in the device region 420, respectively.

A selector can be located on one of the cells displayed in the selector movement region 430. In the present invention, the selector is used for selecting a search object (e.g., devices that store the desired content and types of the content). In this case, the device selected by the selector is the device of the item that corresponds to the second-axis coordinate of the cell on which the selector is located, and the content type selected by the selector is the content type of the item that corresponds to the first-axis coordinate of the cell on which the selector is located. In the user interface illustrated in FIG. 5, movie content is selected as the content type, and "Device 2" is selected as the device.

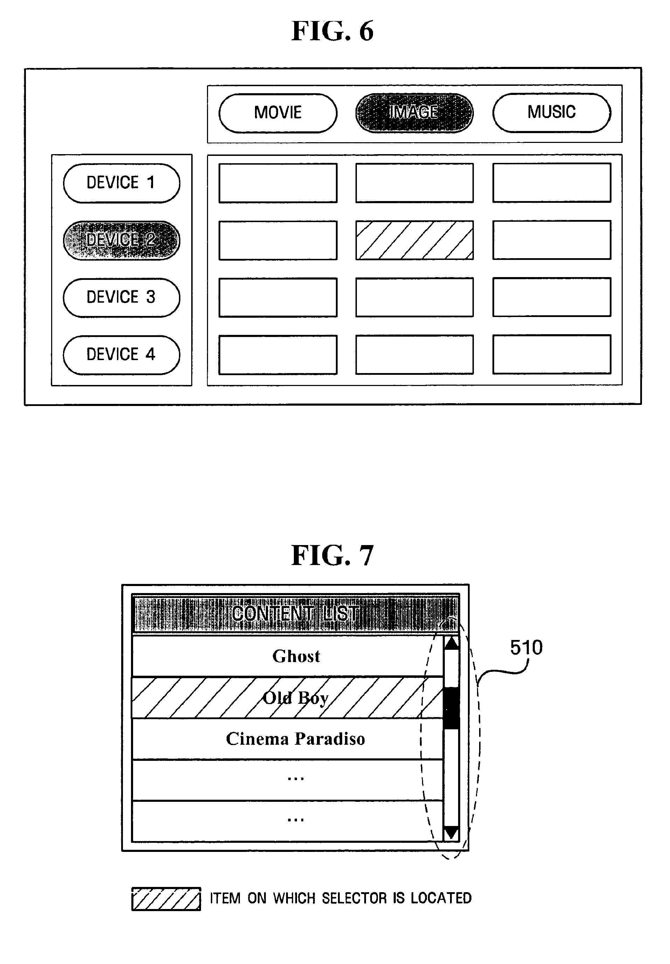

The position of the selector can be changed according to the user's desire. If the user requests movement of the selector using directional keys provided in the input unit, the user input processing unit 260 analyzes the selector movement request and outputs the analyzed request to the control unit 230. Accordingly, the control unit 230 moves the selector in the direction chosen by the user. For example, if the user clicks a "Right" button provided in the input unit in a state where the selector is located as illustrated in Figure 5, the selector moves one cell to the right, as illustrated in Figure 6. In this case, the image item in the type region 410 is selected as the search object.

In the present invention, the selector can be displayed as a highlight, a color different from that of the cell, a border surrounding the cell, or others. However, the present invention is not limited thereto, and thus other display means, which make it possible to discriminate between a cell on which the selector is located and all other cells, can be used to implement the selector according to the exemplary embodiment of the present invention. Similarly, the items selected by the selector (e.g., the item that indicates the device and the item that indicates the content type) can also be highlighted, or displayed with a color different from that of other items or a border surrounding the item, or others.

If a content list request is received from the user, the control unit 230 displays a list of the content having the content type, which are selected by the selector among the content stored in the device selected by the selector, through the display unit 240. That is, when the content list request is input, the displayed content list indicates the content, which correspond to the content type of the item corresponding to the first-axis coordinate of the cell on which the selector is located, among the content stored in the device of the item corresponding to the second-axis coordinate of the cell on which the selector is located.

An example of the content list according to the exemplary embodiment of the present invention is illustrated in Figure 7. The user can search for and select desired content through the displayed content list. The control unit 230 can remove the displayed content list according to the user's request, and display the user interface as was explained with reference to Figure 5.

In addition, if the content list is requested, the control unit 230 can also provide the content information of the item on which the selector is located in addition to the content list. For example, such information may include a content type, a content producer, a content explanation, a content production date, and a content storage position. Also, if the content includes image data, a preview screen for the corresponding image may be provided.

In the case where the whole content list is too long to be displayed within an allocated region, the control unit 230 may display only a part of the content list with a text or an icon for informing the user of the existence of the remaining part of the content list. Accordingly, the user can search for the remaining part of the content list using the input unit.

For example, if the whole content list cannot be displayed in the allocated region, the control unit 230 divides the content list into groups each of which can be displayed within the allocated region, and displays the respective content list groups in a scrollable manner if a request for the remaining part of the content list is received from the user.

In the exemplary embodiment of Figure 7, a scroll bar 510 displays whether the remaining part of the content list exists. In this case, the user can search for the remaining part of the content list by moving the selector upward and downward using the directional buttons provided in the input unit. For example, if the user continues to click the "Down" button, the items of the content list as illustrated in Figure 7 move upward, so that the uppermost item of the content list is hidden from view and the lowermost item is newly displayed.

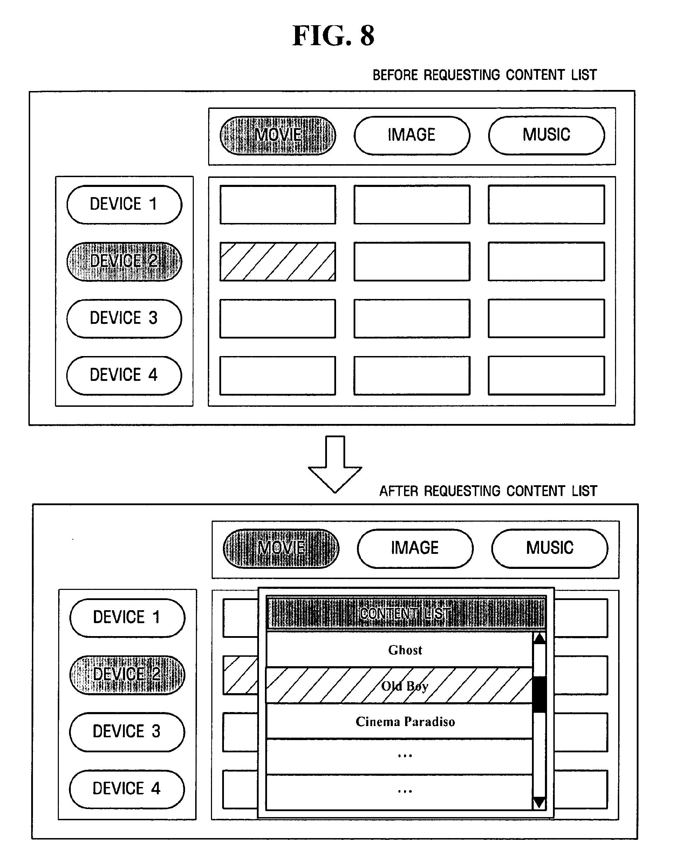

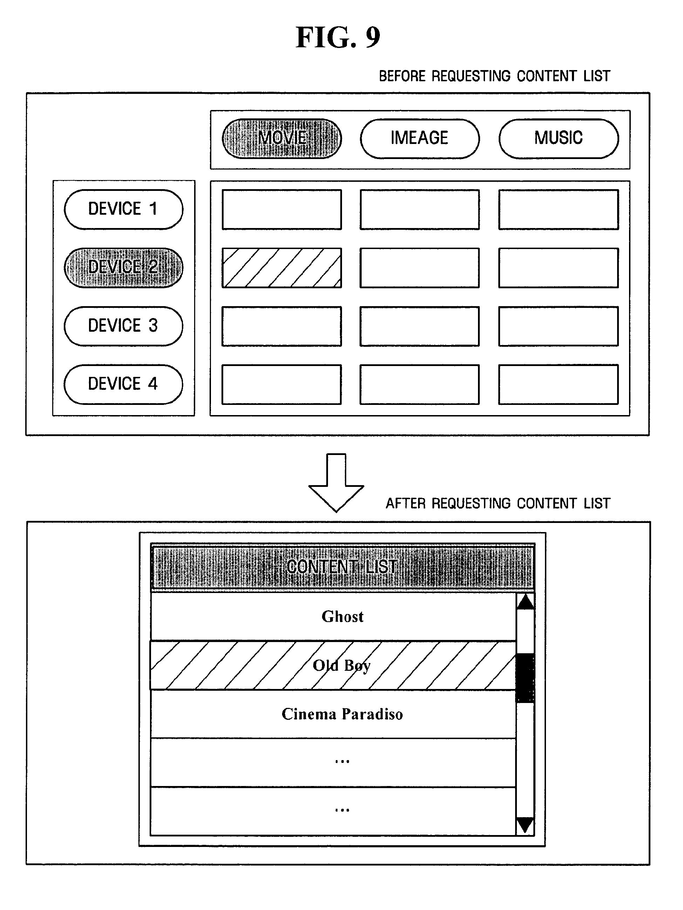

In addition, the content list, as illustrated in Figure 8, may be displayed in a pop-up form in a partial region of the user interface. However, the present invention is not limited thereto. The control unit 230 may change the view screen provided by the display unit 240 and display the content list as a new view screen as illustrated in Figure 9.

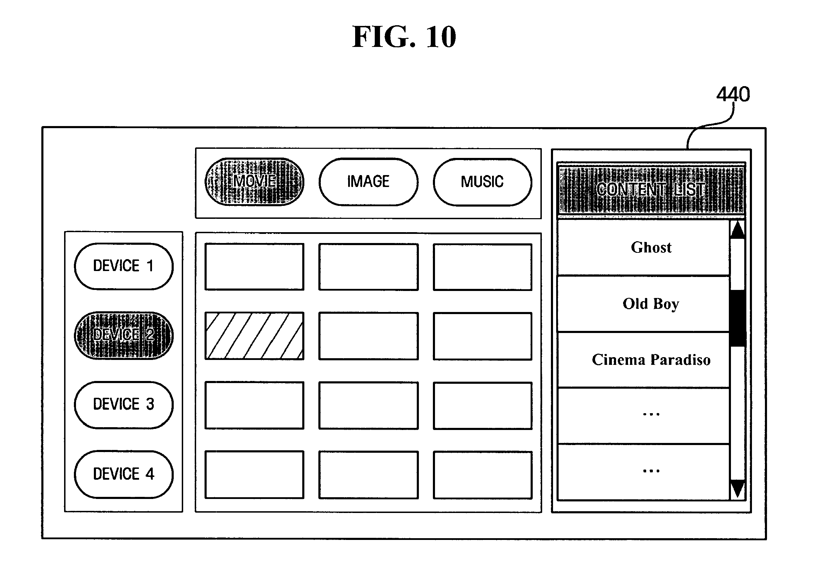

As still another exemplary embodiment to display the content list, as illustrated in Figure 10, the user interface may include a content list region 440 for displaying the content list. In this case, whenever the selector is moved in the selector movement region 430, the content list area 440 can continue to display the list of the content having the content type selected by the selector, among the content stored in the device selected by the selector. At this time, the user can select desired content by activating the selector in the content list region 440 using a specified function button provided by the input unit and then moving the activated selector in the content list region 440 using the direction buttons provided by the input unit. In this state, if the user manipulates a function button twice, the selector is activated in the selector movement region 430.

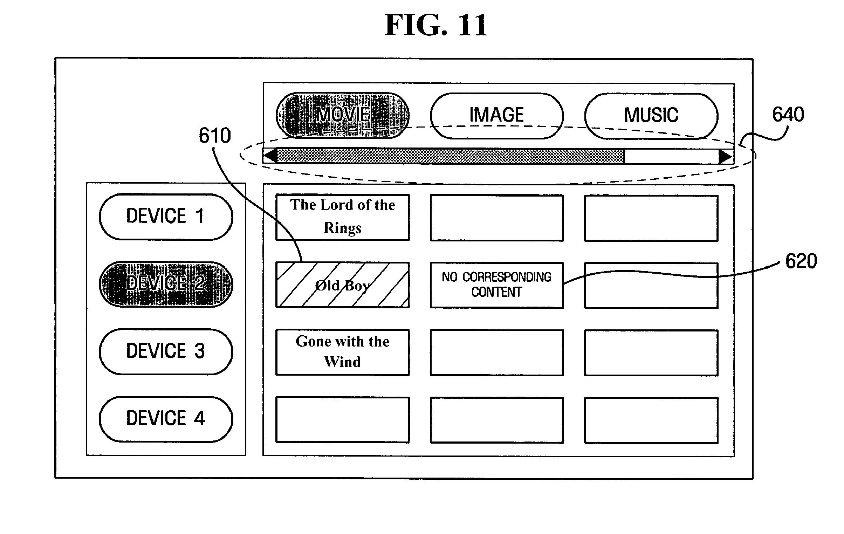

Figure 11 is a view illustrating a user interface according to another exemplary embodiment of the present invention.

In the exemplary embodiment of Figure 11, the user interface shows the name of the most recently used content in the respective cells of the selector movement region 430. For example, a cell 610 on which the selector is located shows the content name "Old Boy." This means that the most recently used content among the movie content stored in "Device 2" is "Old Boy." Although Figure 11 illustrates only some cells displaying such information, the remaining blank cells can also display such information. If the user requests reproduction of the content using a specified function button provided in the input unit, the control unit 230 reproduces the content, which corresponds to the content name displayed by the cell on which the selector is located, through the content reproduction unit 270.

In a similar manner, the control unit can also copy or delete the content corresponding to the content name displayed by the respective cells. For example, if the user requests a content copy after moving the selector to a specified cell, the control unit 230 can download the corresponding content from the device that stores the content that corresponds to the content name displayed by the cell on which the selector is located, and store the downloaded content in the storage unit 250.

In the exemplary embodiment of the present invention, if the device does not store the corresponding content, the corresponding cell 620 can display information indicating that no corresponding content exists. This information may be displayed as text, an icon, a specified color, highlighting, or others. For example, in the user interface illustrated in Figure 11, the information indicating that no corresponding content exists is displayed in text form (see cell 620), and thus, the user can recognize that the image content is not stored in "Device 2."

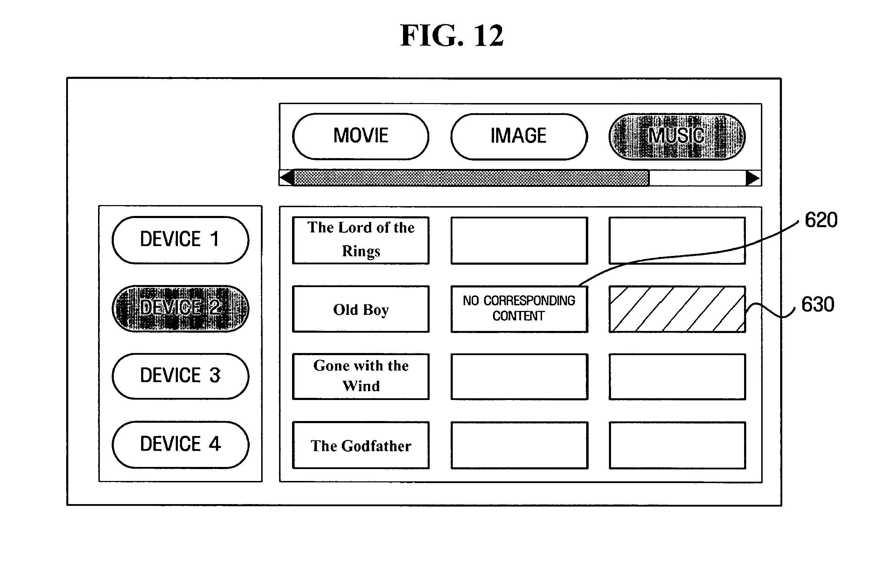

If the user moves the selector in this state, the selector may move to an adjacent cell, passing through the cell 620 on which information indicating that no corresponding content exists is displayed. For example, if the user intends to move the selector by one step to the right using the "Right" button in a state where the selector is located in the position illustrated in FIG. 11, the selector passes through the cell 620 on which the information indicating that no corresponding content exists is displayed, and moves to its adjacent cell 630 as illustrated in Figure 12.

On the other hand, if the number of devices storing the content or the number of content types is larger than the number of items that can be displayed in the device region 420 or the type region 410, the control unit 230 may display text or an icon indicating that there exists remaining items which cannot be displayed in the device region 420 or the type region 410. Accordingly, the user can confirm the remaining items by using a specified button provided in the input unit.

In the exemplary embodiment of Figure 11, whether the remaining items exist is displayed through a scroll bar 640. If the user intends to confirm the remaining items, the user moves the selector to the cell located near the border of the selector movement region 430, and then again moves the selector to the boundary of the selector movement region 430. Accordingly, the items of the device region 420 or the type region 410 are scrolled to display the remaining items.

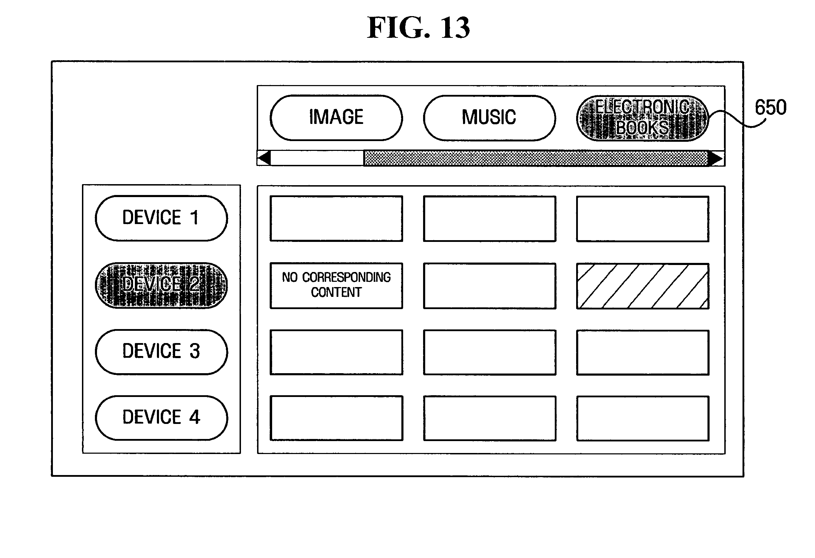

For example, if a user's request to move the selector to the right is input in a state where the selector is located as illustrated in Figure 12, the control unit 230 scrolls the items of the type region 410 to the left as illustrated in Figure 13 to display the remaining item 650.

This process may also be applied to the device region 420 in a similar manner.

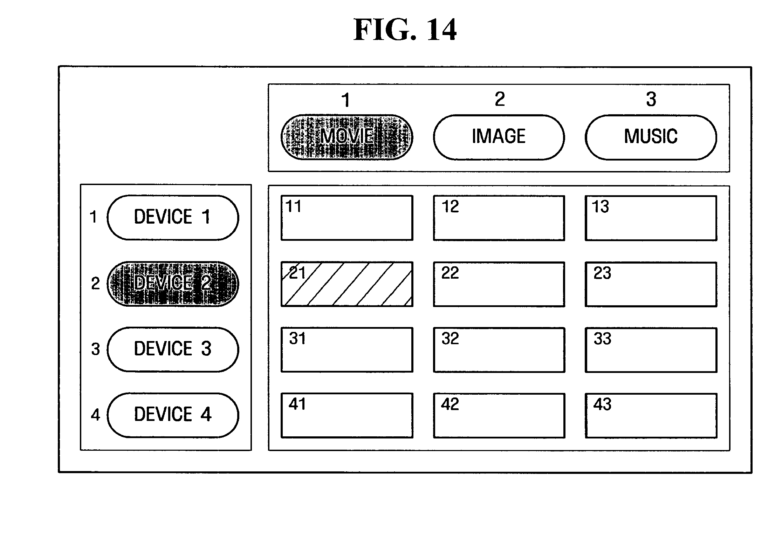

Figure 14 is a view illustrating a user interface according to still another exemplary embodiment of the present invention.

In this user interface, a series of numerals are displayed on the respective items displayed in the type region 410 and the device region 420. Also, numerals are displayed on the cells displayed in the selector movement region 430. The numerals displayed on the cells refer to combinations of the numerals displayed on the items corresponding to the first-axis and the items corresponding to the second-axis. For example, in Figure 14, the numeral "2" is displayed together with the device item "Device 2", which is selected by the selector, and the numeral "1" is displayed together with the content type item "Movie", which is selected by the selector. Accordingly, a combination of the numerals "2" and "1," that is "21," is displayed on the cell on which the selector is located.

The numerals displayed on the respective cells are mapped on the positions of the respective cells. Thus, the user can move the selector by not only the direction buttons but also the numeral buttons of the input unit. For example, if the user clicks the numeral button "2" twice in succession, the selector moves to the cell on which the numeral "22" is displayed.

In the exemplary embodiment of the present invention as described above, the numerals displayed on the cells refer to the combinations of the preceding numerals of the device items and the numerals of the content type items, respectively. However, the present invention is not limited thereto. The numerals displayed on the respective cells may be the combinations of the preceding numerals of the content type items and the numerals of the device items, respectively.

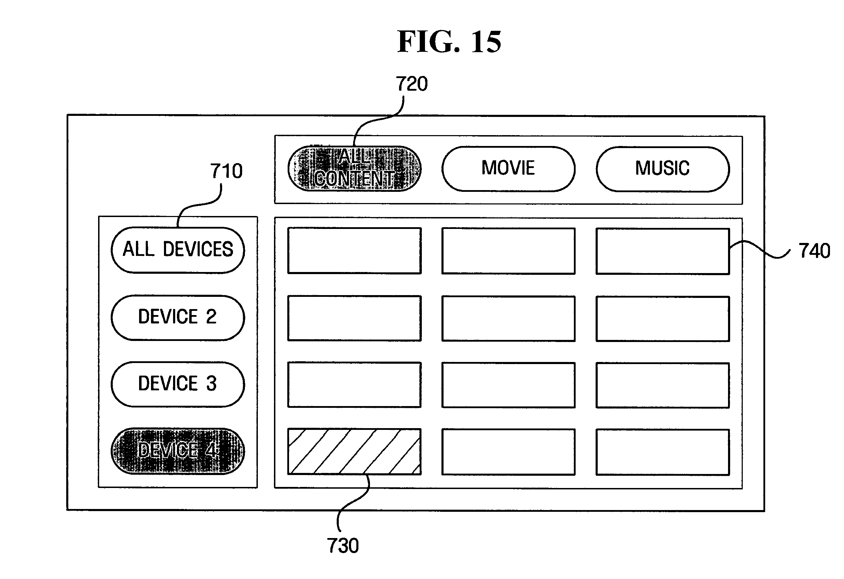

Figure 15 is a view illustrating a user interface according to still another exemplary embodiment of the present invention.

Referring to Figure 15, the type region 410 of the user interface includes an item 720 that indicates all content types, and the device region 420 includes an item 710 that indicates all devices. Accordingly, if the content list is requested in a state where the selector has selected the item 710 indicating all devices, the control unit 230 provides a list of the content stored in all devices. Similarly, if the content list is requested in a state where the selector has selected the item 720 indicating all content types, the control unit 230 provides a list of all types of content stored in the device selected by the selector.

For example, the content list provided in a state where the selector is located on the first cell 730 is a list of all content stored in "Device 4," and the content list that can be provided in a state where the selector is located on the second cell 740 is a list of the music content stored in all the devices.

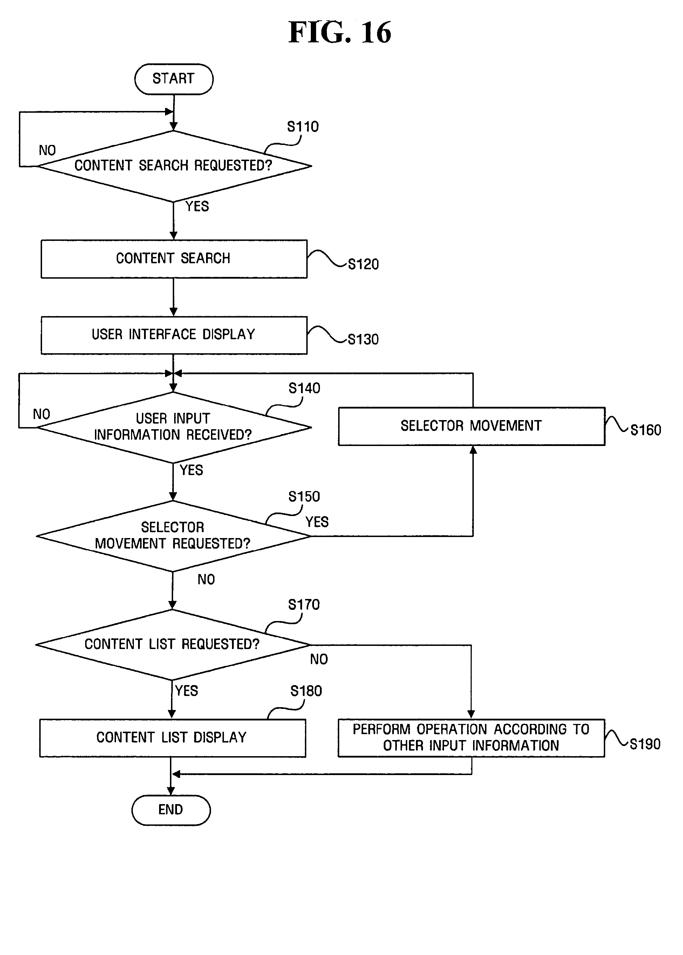

Figure 16 is a flowchart illustrating a method for providing a user interface for a content search according to an exemplary embodiment of the present invention.

Referring to Figure 16, if a content search request is received from an initial user (S110), the search unit 210 searches the content stored in the devices 310 to 330 connected through a wire or wireless interface (S120). In the content search process, the search unit 210 can collect information about the content stored in the respective devices 310 to 320.

If content is searched for, the control unit 230 displays the user interface, as described above with reference to Figures 5 to 15, through the display unit 240 (S130).

That is, the user interface includes a type region 410 for displaying items that indicate content types on the first axis of a specified display region, a device region 420 for displaying items that indicate devices that store content on the second axis (crossing the first axis), and a selector movement region 430 for displaying cells, on each of which a selector can be located, at crossings of first-axis (items that indicate content types) and a second-axis (items that indicate devices), respectively.

Then, if user input information is input through an input unit (S140), the user information processing unit 260 analyzes the received user input information.

If the user input information refers to a selector movement request (S150), the control unit 230 moves the selector from the selector movement region 430 of the user interface to the cell requested by the user (S160).

For example, if the user requests the selector movement by using the direction buttons provided in the input unit, the control unit 230 moves the selector in the direction requested by the user. If the user requests the selector movement by using the numeral buttons provided in the input unit in the case where the user interface as described above with reference to Figure 14 is provided, the control unit 230 can control the selector to move to the cell mapped with the same numeral as the input numeral.

If the user input information refers to the content list request (S170), the control unit 230 displays the list of the content that corresponds to the content type selected by the selector, among the content stored in the device selected by the selector (S180). At this time, the device selected by the selector is the device of the item that corresponds to the second-axis of the cell on which the selector is located, and the content type selected by the selector is the content type of the item that corresponds to the first-axis of the cell on which the selector is located. If the user selects specified content in a state where the content list is displayed, the content reproduction unit 270 reproduces the corresponding content by downloading or streaming the content from the device that stores the selected content.

On the other hand, if the user input information refers to another request, the control unit 230 performs the operation according to the corresponding request (S190). For example, the control unit 230 may remove the displayed content list or stop providing the user interface according to the user input information. Additionally, if the user input information refers to the content reproduction request as described above, the content reproduction unit 270 may reproduce the content corresponding to the content name displayed in the cell on which the selector is located.

As described above, according to the method and apparatus for providing the user interface for a content search according to the present invention, the search object can be easily selected during the content search.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method for providing a user interface (200) for a content search, the method comprising:
displaying first items that indicate content types on a first axis of a first display region (410) and displaying second items that indicate devices that store content on a second axis of a second display region (420), wherein the first axis and the second axis intersect;
displaying cells of specified regions (430), on each of which a selector can be located, at crossings of first-axis coordinates of the first items that indicate the content types and second-axis coordinates of the second items that indicate the devices;
moving the selector among the cells according to a request for selector movement; and
displaying content that corresponds to a content type of a first item corresponding to a first-axis coordinate of a cell on which the selector is located, among content stored in a device of a second item corresponding to a second-axis coordinate of the cell on which the selector is located.

2. The method as claimed in claim 1, wherein the first axis and the second axis are orthogonal.

3. The method as claimed in claim 1 or 2, further comprising displaying a content list of the content that correspond to the content type of the first item corresponding to the first-axis coordinate of the cell on which the selector is located, among the content stored in the device of the second item corresponding to the second-axis coordinate of the cell on which the selector is located.

4. The method as claimed in claim 3, wherein the content list is displayed if a request is input.

5. The method as claimed in claim 3 or 4, wherein the content list is displayed through a pop-up or a change of a view screen.

6. The method as claimed in any preceding claim, wherein the second item corresponding to the second-axis coordinate of the cell on which the selector is located and the first item corresponding to the first-axis coordinate of the cell on which the selector is located are highlighted.

7. The method as claimed in any preceding claim, wherein the cell has the content type of the first item that corresponds to the first-axis coordinate of the cell, and displayed on the cell is a name of the most recently used content among the content stored in the device of the second item that corresponds to the second-axis coordinate of the cell.

8. The method as claimed in any preceding claim, wherein if the device of the second item that corresponds to the second-axis coordinate of the cell does not store the content corresponding to the first content type of the item that corresponds to the first-axis coordinate of the cell, information indicating that no content exists is displayed on the cell.

9. The method as claimed in any preceding claim, wherein if remaining first or second items exist that cannot be displayed on the first axis or the second axis, the displayed first or second items are scrolled according to movement of the selector to display the remaining first or second items.

10. The method as claimed in any preceding claim, wherein the first items displayed on the first axis and the second items displayed on the second axis are mapped with specified numerals, and each cell is mapped with a combination of a numeral that is mapped on a first item displayed on the first axis and a numeral that is mapped on a second item displayed on the second axis, and if specified numerals are input to request selector movement, the selector moves to a cell that is mapped with a combination of the same numerals.

11. The method as claimed in claim 10, wherein the mapped numerals are displayed on the cell.

12. An apparatus for providing a user interface (200) for a content search, the apparatus comprising:
a search unit (210) which searches for content stored in a plurality of devices;
a control unit (230) which provides a list of the content found by the search unit (210) through a specified user interface (200); and
a display unit (240) which displays the user interface (200) provided by the control unit (230);
wherein the user interface (200) comprises a type region (410) which displays first items that indicate content types on a first axis of a specified display region, a device region (420) which displays second items that indicate devices that store content on a second axis that crosses the first axis, and a selector movement region (430) which displays cells of specified regions (430), on each of which a selector can be located, at crossings of first-axis coordinates of the first items that indicate the content types and second-axis coordinates of the second items that indicate the devices; and
wherein the control unit (230) moves the selector among the cells according to a request for selector movement, and controls the display unit (240) to display content that corresponds to a content type of a first item corresponding to a first-axis coordinate of a cell on which the selector is located, among content stored in the device of a second item corresponding to a second-axis coordinate of the cell on which the selector is located.

13. The apparatus as claimed in claim 12, wherein the first axis and the second axis are orthogonal.

14. The apparatus as claimed in claim 12 or 13, further comprising a content reproduction unit which reproduces the content that corresponds to the content type of the first item corresponding to the first-axis coordinate of the cell on which the selector is located, among the content stored in the device of the second item corresponding to the second-axis coordinate of the cell on which the selector is located.

15. The apparatus as claimed in claim 14, wherein the content list is displayed if a request is input.

16. The apparatus as claimed in claim 14 or 15, wherein the content list is displayed through a pop-up or a change of a view screen.

17. The apparatus as claimed in any of claims 12 to 16, wherein the second item corresponding to the second-axis coordinate of the cell on which the selector is located and the first item corresponding to the first-axis coordinate of the cell on which the selector is located are highlighted.

18. The apparatus as claimed in any of claims 12 to 17, wherein the cell has the content type of the first item that corresponds to the first-axis coordinate of the cell, and a name of a most recently used content among the content stored in the device of the second item that corresponds to the second-axis coordinate of the cell is displayed on the cell.

19. The apparatus as claimed in any of claims 12 to 18, wherein if the device of the second item that corresponds to the second-axis coordinate of the cell does not store the content corresponding to the content type of the first item that corresponds to the first-axis coordinate of the cell, information indicating that no content exists is displayed on the cell.

20. The apparatus as claimed in any of claims 12 to 19, wherein if remaining first or second items exist that cannot be displayed on the first axis or the second axis, the displayed first and second items are scrolled according to movement of the selector to display the remaining items.

21. The apparatus as claimed in any of claims 12 to 20, wherein the first items displayed on the first axis and the second items displayed on the second axis are mapped with specified numerals, each cell is mapped with a combination of a numeral that is mapped on a first item displayed on the first axis and a numeral that is mapped on a second item displayed on the second axis, and if numerals are used to input the selector movement request, the selector moves to a cell that is mapped with the input numerals.

22. The apparatus as claimed in claim 21, wherein the mapped numerals are displayed on the cell.
